# EUROPEAN PATENT SPECIFICATION

(11) **EP 3 950 780 B1**
(45) Date of publication and mention of the grant of the patent: **19.03.2025**
(21) Application number: 20784195.8
(22) Date of filing: 26.03.2020
(51) Int. Cl.: C08G 65/336, C09D 5/16, C09D 171/00, C09D 183/12, C09K 3/18, C08G 65/00

(54) **FLUOROPOLYETHER-GROUP-CONTAINING COMPOUND**
FLUORPOLYETHERGRUPPENHALTIGE VERBINDUNG
COMPOSÉ COMPRENANT UN GROUPE FLUORO POLYETHER

(30) Priority: 29.03.2019 JP 2019066360
(43) Date of publication of application: 09.02.2022
(73) Proprietor: DAIKIN INDUSTRIES, LTD., Osaka-Shi, Osaka 530-0001 (JP)
(72) Inventor: YAMASHITA, Tsuneo, Osaka-shi, Osaka 530-8323 (JP); MITSUHASHI, Hisashi, Osaka-shi, Osaka 530-8323 (JP); KATSUKAWA, Kenichi, Osaka-shi, Osaka 530-8323 (JP); MAEHIRA, Takeshi, Osaka-shi, Osaka 530-8323 (JP); MOTONARI, Yoshimi, Osaka-shi, Osaka 530-8323 (JP)
(74) Representative: Hoffmann Eitle
(86) International application number: PCT/JP2020/013762
(87) International publication number: WO 2020/203676

(56) References cited:
- EP-A2- 2 589 615
- WO-A1-2011/059430
- JP-A- 2002 348 370
- JP-A- 2015 007 660
- JP-A- 2016 020 407
- JP-A- 2018 135 516
- JP-A- 2018 150 508
- US-A- 3 971 751

## Description

### Technical Field

The present disclosure relates to a fluoropolyether group-containing compound.

### Background Art

Certain types of fluorine-containing silane compounds are known to be capable of providing excellent water-repellency, oil-repellency, antifouling properties, and the like when used in surface treatment of a substrate. A layer obtained from a surface-treating agent containing the fluorine-containing silane compound (hereinafter, also referred to as a "surface-treating layer") is applied as a so-called functional thin film to a large variety of substrates such as glass, plastics, fibers, and building materials.

A known such fluorine-containing compound is a fluoropolyether group-containing silane compound having a fluoropolyether group in the molecular backbone and a hydrolyzable group bonding to a Si atom at the molecular terminal or in the terminal part (Patent Literature 1).

JP2002348370A discloses a perfluoropolyether modified by a silane group used as surface treating agent.

### Prior Art Literature

### Patent Literature

Patent Literature 1: JP 2000-327772 A

### Summary of Invention

### Technical Problem

The surface-treating layer as described above may be required to have good friction durability.

### Solution to Problem

The present disclosure provides a compound, which is a fluoropolyether group-containing compound as defined in claims 1 to 9, a surface-treating agent comprising the compound, the use of this surface-treating agent for vacuum deposition and/or as an antifouling coating agent or water-proof coating agent.

The invention relates as well to a pellet comprising the surface-treating agent and to an article comprising a substrate and a layer on a surface of the substrate, wherein the layer is formed of the compound according to any one of claims 1-9 or the surface-treating agent according to any one of claims 10-13.

### Advantageous Effect of Invention

According to the present disclosure, a fluoropolyether group-containing compound usable in the formation of a surface-treating layer having good friction durability can be provided.

### Description of Embodiments

The "monovalent organic group" as used herein means a carboncontaining monovalent group. The monovalent organic group is not limited, and may be a hydrocarbon group or a derivative thereof. A derivative of a hydrocarbon group means a group having one or more of N, O, S, Si, amide, sulfonyl, siloxane, carbonyl, carbonyloxy, and the like at the terminal or in the molecular chain of the hydrocarbon group.

The "divalent organic group" as used herein is not limited, and examples include a divalent group obtained by removing one more hydrogen atom from the hydrocarbon group.

The "hydrocarbon group" as used herein means a group that contains carbon and hydrogen and that is obtained by removing one hydrogen atom from a molecule. The hydrocarbon group is not limited, and examples include a hydrocarbon group that has 1 to 20 carbon atoms and that is optionally substituted with one or more substituents, such as an aliphatic hydrocarbon group and an aromatic hydrocarbon group. The "aliphatic hydrocarbon group" may be either straight, branched, or cyclic, and may be either saturated or unsaturated. The hydrocarbon group may contain one or more ring structures. The hydrocarbon group may have one or more of N, O, S, Si, amide, sulfonyl, siloxane, carbonyl, carbonyloxy, and the like at the terminal or in the molecular chain thereof.

The substituent of the "hydrocarbon group" as used herein is not limited, and examples include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

Herein, the alkyl group and the phenyl group may be substituted or unsubstituted, unless specified otherwise. A substituent of such a group is not limited, and examples include one or more groups selected from a halogen atom, a C₁₋₆ alkyl group, a C₂₋₆ alkenyl group, and a C₂₋₆ alkynyl group.

The "hydrolyzable group" as used herein means a group capable of undergoing a hydrolysis reaction, i.e., means a group that can be removed from the main backbone of a compound by a hydrolysis reaction. Examples of the hydrolyzable group include -OR^{h}, -OCOR^{h}, -O-N=CR^{h}₂, -NR^{h}₂, -NHR^{h}, and halogen (in these formulae, R^{h} represents a substituted or unsubstituted C₁₋₄ alkyl group) .

The fluoropolyether group-containing compound of the present disclosure is a compound of formula (1) or (2) below, as defined in claim 1:

R^{F1}-X-R^{Si} (1)

R^{Si}-X-R^{F2}-X-R^{Si} (2)

In formula (1), R^{F1} is each independently at each occurrence Rf¹-R^{F}-O_{q}-.

In formula (2), R^{F2} is -Rf²ₚ-R^{F}-O_{q}-.

In the formulae, Rf¹ is each independently at each occurrence a C₁₋₁₆ alkyl group optionally substituted with one or more fluorine atoms.

The "C₁₋₁₆ alkyl group" as in the C₁₋₁₆ alkyl group optionally substituted with one or more fluorine atoms may be straight or branched, and is preferably a straight or branched C₁₋₆ alkyl group and in particular C₁₋₃ alkyl group, and more preferably a straight C₁₋₆ alkyl group and in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and even more preferably a C₁₋₁₆ perfluoroalkyl group.

The C₁₋₁₆ perfluoroalkyl group may be straight or branched, and is preferably a straight or branched C₁₋₆ perfluoroalkyl group and in particular C₁₋₃ perfluoroalkyl group, more preferably a straight C₁₋₆ perfluoroalkyl group and in particular C₁₋₃ perfluoroalkyl group, and specifically -CF₃, -CF₂CF₃, or -CF₂CF₂CF₃.

In the formulae, Rf² is a C₁₋₆ alkylene group optionally substituted with one or more fluorine atoms.

The "C₁₋₆ alkylene group" as in the C₁₋₆ alkylene group optionally substituted with one or more fluorine atoms may be straight or branched, and is preferably a straight or branched C₁₋₃ alkylene group, and more preferably a straight C₁₋₃ alkylene group.

Rf² is preferably a C₁₋₆ alkylene group substituted with one or more fluorine atoms, more preferably a C₁₋₆ perfluoroalkylene group, and even more preferably a C₁₋₃ perfluoroalkylene group.

The C₁₋₆ perfluoroalkylene group may be straight or branched, and is preferably a straight or branched C₁₋₃ perfluoroalkylene group, more preferably a straight C₁₋₃ perfluoroalkylene group, and specifically -CF₂-, -CF₂CF₂-, or -CF₂CF₂CF₂-.

In the formulae, p is 0 or 1. In one embodiment, p is 0. In another embodiment, p is 1.

In the formulae, q is each independently at each occurrence 0 or 1. In one embodiment, q is 0. In another embodiment, q is 1.

In formulae (1) and (2), R^{F} is each independently at each occurrence a fluoropolyether group represented by the following formula. As for the structure referred to as R^{F}, the left side is bonded to a structure represented by Rf¹ in formula (1), and the left side is bonded to a structure represented by Rf²ₚ in formula (2) .

- (OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently at each occurrence a hydrogen atom, a fluorine atom, or a chlorine atom;
a, b, c, d, e, and f are each independently an integer of 0 to 200; the sum of a, b, c, d, e, and f is 1 or more; and the occurrence order of each repeating unit enclosed in parentheses provided with a, b, c, d, e, or f is not limited in the formula.

R^{Fa} is preferably a hydrogen atom or a fluorine atom, and more preferably a fluorine atom.

a, b, c, d, e, and f may be preferably each independently an integer of 0 to 100.

The sum of a, b, c, d, e, and f is preferably 5 or more and more preferably 10 or more, and may be, for example, 15 or more or 20 or more. The sum of a, b, c, d, e, and f is preferably 200 or less, more preferably 100 or less, even more preferably 60 or less, such as 50 or less or 30 or less.

These repeating units may be straight or branched, and are preferably straight. For example, - (OC₆F₁₂)- may be - (OCF₂CF₂CF₂CF₂CF₂CF₂)- , - (OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, - (OCF₂CF₂CF₂CF₂CF(CF₃)-, or the like, and is preferably -(OCF₂CF₂CF₂CF₂CF₂CF₂)-. - (OC₅F₁₀)- may be -(OCF₂CF₂CF₂CF₂CF₂)-, -(OCF(CF₃)CF₂CF₂CF₂)-, - (OCF₂CF(CF₃)CF₂CF₂)-, -(OCF₂CF₂CF(CF₃)CF₂)-, - (OCF₂CF₂CF₂CF(CF₃))-, or the like, and is preferably - (OCF₂CF₂CF₂CF₂CF₂)-. - (OC₄F₈)- may be any of -(OCF₂CF₂CF₂CF₂)-, - (OCF (CF₃)CF₂CF₂)-, -(OCF₂CF(CF₃)CF₂)-, - (OCF₂CF₂CF(CF₃)) - , - (OC(CF₃)₂CF₂)-, - (OCF₂C(CF₃)₂)-, - (OCF (CF₃)CF (CF₃))-, - (OCF(C₂F₅)CF₂)-, and -(OCF₂CF(C₂F₅)) -, and is preferably - (OCF₂CF₂CF₂CF₂)-. -(OC₃F₆)- (that is to say, in the formula, R^{Fa} is a fluorine atom) may be any of -(OCF₂CF₂CF₂)-, - (OCF(CF₃)CF₂)-, and -(OCF₂CF(CF₃))-, and is preferably - (OCF₂CF₂CF₂)-. Also, - (OC₂F₄)- may be any of -(OCF₂CF₂)- and - (OCF (CF₃)) -, and is preferably -(OCF₂CF₂)-.

In one embodiment, R^{F} is each independently at each occurrence a group represented by formula (f1), (f2), (f3), (f4), or (f5) below:

-(OC₃F₆)_{d}- (f1)

wherein d is an integer of 1 to 200;

   - (OC₄F₈)_{c}-(OC₃F₆)_{d}-(OC₂F₄)ₑ-(OCF₂)_{f}- (f2)
wherein c and d are each independently an integer of 0 or more and 30 or less, e and f are each independently an integer of 1 or more and 200 or less,
the sum of c, d, e, and f is 2 or more, and
the occurrence order of each repeating unit enclosed in parentheses provided with a subscript c, d, e, or f is not limited in the formula;

   - (R⁶-R⁷)_{g}- (f3)
wherein R⁶ is OCF₂ or OC₂F₄,
R⁷ is a group selected from OC₂F₄, OC₃F₆, OC₄F₃, OC₅F₁₀, and OC₆F₁₂, or is a combination of two or three groups independently selected from these groups, and
g is an integer of 2 to 100;

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1 or more and 200 or less, a, b, c, d, and f are each independently an integer of 0 or more and 200 or less, the sum of a, b, c, d, e, and f is at least 1, and the occurrence order of each repeating unit enclosed in parentheses provided with a, b, c, d, e, or f is not limited in the formula; and

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein f is an integer of 1 or more and 200 or less, a, b, c, d, and e are each independently an integer of 0 or more and 200 or less, the sum of a, b, c, d, e, and f is at least 1, and the occurrence order of each repeating unit enclosed in parentheses provided with a, b, c, d, e, or f is not limited in the formula.

In formula (f1), d is preferably an integer of 5 to 200, more preferably 10 to 100, and even more preferably 15 to 50, such as 25 to 35. Formula (f1) is preferably a group represented by -(OCF₂CF₂CF₂)_{d}- or -(OCF(CF₃)CF₂)_{d}-, and is more preferably a group represented by - (OCF₂CF₂CF₂)_{d}-.

In formula (f2), e and f are each independently preferably an integer of 5 or more and 200 or less, and more preferably 10 to 200. The sum of c, d, e, and f is preferably 5 or more and more preferably 10 or more, and may be, for example, 15 or more or 20 or more. In one embodiment, formula (f2) is preferably a group represented by -(OCF₂CF₂CF₂CF₂)_{c}-(OCF₂CF₂CF₂)_{d}-(OCF₂CF₂)ₑ-(OCF₂)_{f}-. In another embodiment, formula (f2) may be a group represented by - (OC₂F₄)ₑ-(OCF₂)_{f}-.

In formula (f3), R⁶ is preferably OC₂F₄. In formula (f3), R⁷ is preferably a group selected from OC₂F₄, OC₃F₆, and OC₄F₈, or a combination of two or three groups independently selected from these groups, and is more preferably a group selected from OC₃F₆ and OC₄F₈. Examples of the combination of 2 or 3 groups independently selected from OC₂F₄, OC₃F₆, and OC₄F₈ include, but are not limited to, -OC₂F₄OC₃F₆-, - OC₂F₄OC₄F₈-, -OC₃F₆OC₂F₄-, -OC₃F₆OC₃F₆-, -OC₃F₆OC₄F₈-, - OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈- , -OC₂F₄OC₃F₆OC₂F₄-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. In formula (f3), g is preferably an integer of 3 or more, and more preferably 5 or more. g is preferably an integer of 50 or less. In formula (f3), OC₂F₄, OC₃F₆, OC₄F₈, OC₅F₁₀, and OC₆F₁₂ may be either straight or branched, and are preferably straight. In this embodiment, formula (f3) is preferably -(OC₂F₄-OC₃F₆)_{g}- or - (OC₂F₄-OC₄F₈)_{g}-.

In formula (f4), e is preferably an integer of 1 or more and 100 or less, and more preferably 5 or more and 100 or less. The sum of a, b, c, d, e, and f is preferably 5 or more, and more preferably 10 or more, such as 10 or more and 100 or less.

In formula (f5), f is preferably an integer of 1 or more and 100 or less, and more preferably 5 or more and 100 or less. The sum of a, b, c, d, e, and f is preferably 5 or more, and more preferably 10 or more, such as 10 or more and 100 or less.

In one embodiment, R^{F} is a group represented by formula (f1).

In one embodiment, R^{F} is a group represented by formula (f2).

In one embodiment, R^{F} is a group represented by formula (f3).

In one embodiment, R^{F} is a group represented by formula (f4).

In one embodiment, R^{F} is a group represented by formula (f5).

In a preferable embodiment, R^{F} is a group represented by formula (f2):

- (OC₄F₈)_{c}-(OC₃F₆)_{d}-(OC₂F₄)ₑ-(OCF₂)_{f}-

wherein c and d are each independently an integer of 0 or more and 30 or less; e and f are each independently an integer of 1 or more and 200 or less, preferably 5 or more and 200 or less, and more preferably 10 or more and 200 or less; and the occurrence order of each repeating unit enclosed in parentheses provided with a subscript e or f is not limited in the formula. R^{F} is more specifically a group represented by - (OC₂F₄)ₑ-(OCF₂)_{f}-.

The ratio of e to f in R^{F} (hereinafter, referred to as an "e/f ratio") is 0.1 to 10, preferably 0.2 to 5, more preferably 0.2 to 2, even more preferably 0.2 to 1.5, and further preferably 0.2 to 0.85. With an e/f ratio of 10 or less, the lubricity, friction durability, and chemical resistance (for example, durability against artificial sweat) of a cured layer (for example, a surface-treating layer) obtained from the compound are further increased. The smaller the e/f ratio is, the higher the lubricity and the friction durability of the surface-treating layer are. On the other hand, with an e/f ratio of 0.1 or more, the stability of the compound can be further increased. The larger the e/f ratio is, the higher the stability of the compound is.

In one embodiment, the e/f ratio is preferably 0.2 to 0.95, and more preferably 0.2 to 0.9.

In one embodiment, the e/f ratio is preferably 0.20 or more and less than 1.0, more preferably 0.20 to 0.95, more preferably 0.20 to 0.90, even more preferably 0.40 to 0.80, and particularly preferably 0.50 to 0.70.

In one embodiment, the e/f ratio is preferably 0.20 to 0.80, and more preferably 0.30 to 0.70. In another embodiment, the e/f ratio is 0.50 to 0.80.

In one embodiment, from the viewpoint of heat resistance, the e/f ratio is preferably 1.0 or more, and more preferably 1.0 to 2.0.

In one embodiment, the e/f ratio is 0.2 to 1.5, and preferably 0.5 to 1.1.

In R^{F}, the e/f ratio may be less than 1.0, may be 0.95 or less, may be 0.90 or less, may be less than 0.90, such as 0.8 or less, and may be 0.70 or less. The e/f ratio is preferably 0.20 or more, more preferably 0.30 or more, even more preferably 0.40 or more, and particularly preferably 0.50 or more. The e/f ratio may be, for example, 0.20 or more and less than 1.0, such as 0.20 or more and 0.95 or less, 0.20 or more and less than 0.90, specifically 0.40 or more and 0.80 or less, and more specifically 0.50 or more and 0.70 or less. When the e/f ratio is excessively low, the hydrolyzability of a cured layer (or a cured film. The same applies below) formed using the compound of the present disclosure is increased, and the durability of the cured layer may be impaired. When the e/f ratio is excessively high, the dynamic friction coefficient of a cured layer formed using the compound of the present disclosure is increased, and a cured layer having sufficient friction durability may not be obtained.

In a preferable embodiment, R^{F} is a group represented by:

-(OC₄F₈)_{c}-(OC₃F₆)_{d}-(OC₂F₄)ₑ-(OCF₂)_{f}- (f2)

wherein c and d are each independently an integer of 0 or more and 30 or less, e and f are each independently an integer of 1 or more and 200 or less, preferably 5 or more and 200 or less, and more preferably 10 or more and 200 or less, and the occurrence order of each repeating unit enclosed in parentheses provided with a subscript e or f is not limited in the formula; and
the e/f ratio is 0.20 or more and less than 1.0, more preferably 0.20 to 0.95, more preferably 0.20 to 0.90, even more preferably 0.40 to 0.80, and particularly preferably 0.50 to 0.70. R^{F} is more specifically a group represented by -(OC2F₄)ₑ-(OCF₂)_{f}-.

Due to the use of a compound having such R^{F}, a cured layer formed using the compound has good chemical durability (chemical resistance), friction durability, water-repellency, oil-repellency, antifouling properties (e.g., preventing grimes such as fingerprints from adhering), waterproof properties (preventing water from entering electronic components and the like), surface slickness (or lubricity, e.g., removability of grimes such as fingerprints by wiping, and excellent tactile sensation to the fingers), or the like. This is considered to be because, due to the use of a compound having such R^{F}, the dynamic friction coefficient of the surface of a cured layer formed of the compound is reduced.

In one embodiment, R^{F} is a group represented by:

- (OC₄F₈)_{c}-(OC₃F₆)_{d}-(OC₂F₄)ₑ-(OCF₂)_{f}- (f2)

wherein c and d are each independently an integer of 0 or more and 30 or less, e and f are each independently an integer of 1 or more and 200 or less, preferably 5 or more and 200 or less, and more preferably 10 or more and 200 or less, and the occurrence order of each repeating unit enclosed in parentheses provided with a subscript e or f is not limited in the formula; and
the e/f ratio is 0.20 to 0.80, and more preferably 0.30 to 0.70.

In one embodiment, e may be an integer of 10 or more and 100 or less, and f may be an integer of 11 or more and 100 or less; and e may be an integer of 15 or more and 70 or less, and f may be an integer of 21 or more and 95 or less.

In one embodiment, the sum of e and f is preferably 20 or more, more preferably 30 or more, and particularly preferably 40 or more.

In another embodiment, the sum of e and f is preferably 100 or more, more preferably 120 or more, even more preferably 130 or more, and particularly preferably 140 or more.

In one embodiment, the sum of e and f is preferably 200 or less, more preferably 180 or less, even more preferably 160 or less, and particularly preferably 150 or less.

The number average molecular weights of R^{F1} and R^{F2} moieties are not limited, and are, for example, 500 to 30,000, preferably 1,500 to 30,000, more preferably 2,500 to 30,000, and even more preferably 4,000 to 30,000. The number average molecular weights of R^{F1} and R^{F2} moieties may be, for example, 2,500 to 20,000, 2,500 to 15,000, 3,000 to 15,000, or 2,000 to 10,000. Herein, the number average molecular weights of R^{F1} and R^{F2} are values measured by ¹⁹F-NMR.

In another embodiment, the number average molecular weights of R^{F1} and R^{F2} moieties may be 500 to 30,000, preferably 1,000 to 20,000, more preferably 2,000 to 15,000, and even more preferably 2,000 to 10,000, such as 3,000 to 6,000.

In another embodiment, the number average molecular weights of R^{F1} and R^{F2} moieties may be 6,000 to 30,000, preferably 6,000 to 20,000, more preferably 7,000 to 20,000, even more preferably 8,000 to 15,000, particularly preferably 9,000 to 15,000, and more preferably 10,000 to 15,000. The number average molecular weights of R^{F1} and R^{F2} moieties may be in a range of, for example, 6,000 to 15,000.

In one embodiment, in the fluoropolyether group-containing compound of the present disclosure,
R^{F1} and R^{F2} moieties have a number average molecular weight in a range of 6,000 to 20,000 and an e/f ratio in a range of 0.50 to 0.80;
preferably, R^{F1} and R^{F2} moieties have a number average molecular weight in a range of 6,000 to 15,000 and an e/f ratio in a range of 0.50 to 0.70; and
more preferably, R^{F1} and R^{F2} moieties have a number average molecular weight in a range of 10,000 to 15,000 and an e/f ratio in a range of 0.50 to 0.70.

In this embodiment, R^{F} is preferably a group represented by - (OC₄F₈)_{c}-(OC₃F₆)ₐ-(OC₂F₄)ₑ-(OCF₂)_{f}-. Here, for example, c and d are each independently an integer of 0 or more and 30 or less, e is an integer in a range of 20 to 70, and f is an integer in a range of 45 to 120. Such a fluoropolyether group-containing compound can contribute to the formation of a cured layer (for example, a surface-treating layer) exhibiting lubricity resulting from an extremely high lubricity and low dynamic friction coefficient.

Herein, in the fluoropolyether group-containing compounds represented by formulae (1) and (2), the group represented by R^{F1} or R^{F2} and the group represented by R^{Si} are bonded via the group represented by X. Here, in the compounds represented by formulae (1) and (2), the group represented by R^{F1} or R^{F2} is a group containing a fluoropolyether group that mainly provides water-repellency, surface slickness, and the like, and the group represented by R^{Si} is a silane moiety that provides the ability to bind to a substrate.

The group represented by X has the following structure. Here, as for the structure represented by X, the left side is bonded to the group represented by R^{F1} in the compound represented by formula (1) and to the group represented by R^{F2} in the compound represented by formula (2), and the right side is bonded to the group represented by R^{S1} in formulae (1) and (2).

-R^{z1}-O-R^{z2}-

R^{z1} is each independently at each occurrence a group represented by -(CH₂)_{z1}-.

z1 is each independently at each occurrence an integer of 0 to 20, preferably an integer of 1 to 20, more preferably an integer of 1 to 6, and even more preferably an integer of 1 to 3.

R^{z2} is independently a group represented by -(CH₂)_{z2}-optionally substituted with a C₁₋₆ alkyl group or a cyclic alkyl group optionally containing one or more nitrogen atoms, oxygen atoms, sulfur atoms, or silicon atoms, or with a perfluoroalkyl group; and z2 is independently an integer of 0 to 20, preferably an integer of 1 to 20, more preferably an integer of 1 to 6, and even more preferably an integer of 1 to 4. Here, when a nitrogen atom, an oxygen atom, a sulfur atom, or a silicon atom is contained in the C₁₋₆ alkyl group or the cyclic alkyl group, such an atom is contained in the molecular chain (i.e., between a carbon atom and a carbon atom) of the C₁₋₆ alkyl group or the cyclic alkyl group.

R^{z2} is each independently at each occurrence preferably a group represented by -(CH₂)_{z2}-; and z2 is independently an integer of 0 to 20, preferably an integer of 1 to 20, more preferably an integer of 1 to 6, and even more preferably an integer of 1 to 4.

In one embodiment, preferably, the group represented by X is represented by -(CH₂)_{z1}-O-(CH₂)_{z2}-, z1 is an integer of 1 to 20, and z2 is an integer of 1 to 20. In this embodiment, more preferably z1 is an integer of 1 to 6, and z2 is an integer of 1 to 6, and even more preferably z1 is an integer of 1 to 3, and z2 is an integer of 1 to 4.

Due to the presence of X, a cured layer (for example, a surface-treating layer) formed using the fluoropolyether group-containing compound of the present disclosure may have increased chemical resistance (for example, resistance to an aqueous solution of strong alkali and an aqueous solution of strong acid, and resistance to oxidation by active oxygen species).

In formulae (1) and (2), R^{Si} is each independently at each occurrence a monovalent group containing a Si atom to which a hydroxyl group, a hydrolyzable group, a hydrogen atom, or a monovalent organic group is bonded.

In the fluoropolyether group-containing compound of the present disclosure, R^{Si} is each independently at each occurrence a group represented by formula (S1) below.

-SiR^{a1}₂R^{b1} (S1)

In formula (S1), R^{a1} is each independently at each occurrence a group represented by -Z¹-SiR²²_{q1}R²³ᵣ₁.

In a preferable embodiment, Z¹ does not form a siloxane bond with a Si atom to which Z¹ is bonded. That is to say, in formula (S1), (Si-Z¹-Si) does not contain a siloxane bond.

Z¹ is a C₁₋₆ alkylene group, -(CH₂)_{z11}-O-(CH₂)_{z12}-, or -(CH₂)_{z13}-phenylene-(CH₂)_{z14}-. The C₁₋₆ alkylene group may be straight or branched, and is preferably straight. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

z11 is an integer of 1 to 6, and z12 is an integer of 1 to 6.

z13 is an integer of 0 to 6, such as an integer of 1 to 6, and z14 is an integer of 0 to 6, such as an integer of 1 to 6. Preferably, the sum of z13 and z14 is 1 or more.

More preferably, z1 is a C₁₋₆ alkylene group and may be, for example, -CH₂CH₂CH₂-. In another embodiment, Z¹ may be - CH₂CH₂-.

R²² is each independently at each occurrence a hydroxyl group or a group that can be removed by a hydrolysis reaction.

R²² is each independently at each occurrence preferably a group that can be removed by a hydrolysis reaction.

R²² is preferably each independently at each occurrence -OR^{h}, -OCOR^{h}, -O-N=CR^{h}₂, - NR^{h} ₂, -NHR^{h}, or halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group is preferable, and a methyl group or an ethyl group is more preferable. In one embodiment, R^{h} is a methyl group, and in another embodiment, R^{h} is an ethyl group.

R²³ is each independently at each occurrence a hydrogen atom or a monovalent organic group. Such a monovalent organic group excludes the above hydrolyzable group.

The monovalent organic group in R²³ is preferably a C₁₋₂₀ alkyl group, more preferably a C₁₋₆ alkyl group, even more preferably a C₁₋₃ alkyl group, and particularly preferably a methyl group.

q1 is each independently at each occurrence an integer of 1 to 3, and r1 is each independently at each occurrence an integer of 0 to 2. The sum of q1 and r1 is 3 in the (SiR²²_{q1}R²³ᵣ₁) unit.

In one embodiment, q1 is each independently preferably an integer of 2 to 3, and more preferably 3, for each (SiR²²_{q1}R²³ᵣ₁) unit.

In one embodiment, q1 is an integer of 2 to 3, and more preferably 3.

In formula (S1), R^{b1} is a C₁₋₆ alkyl group, preferably a C₁₋₃ alkyl group, such as a methyl group. Due to the presence of such R^{b1}, the perfluoropolyether group-containing compound of the present disclosure has a significantly lowered hydrolysis reaction rate and can contribute to the formation of a cured layer having an increased durability. This is considered to be because a nucleophilic reaction on the Si atom can be suppressed due to the electron donating effect and the effect of the bulky three-dimensional structure of R^{b1}.

As described above, in the fluoropolyether group-containing compound of the present disclosure, one alkyl group represented by R^{b1} is bonded to the Si atom directly bonded to X and, moreover, two groups represented by R^{a1} are bonded to the Si atom. The group represented by R^{a1} contains a Si atom bonded to a hydroxyl group or a hydrolyzable group (specifically, R²²).

Due to such a structure, the use of the fluoropolyether group-containing compound of the present disclosure can result in increased water-repellency, antifouling properties, fingerprint removability by wiping, and lubricity of a cured layer formed using the compound. This is considered to be because silanol, which can be produced by the hydrolysis reaction of the compound, is unlikely produced, and a condensation reaction between the compound and a substrate and between the compounds proceeds efficiently.

In a preferable embodiment, the fluoropolyether group-containing compound of the present disclosure has R^{Si} represented by the following formula (S1-1) or (S1-2), and more preferably R^{Si} represented by the following formula (S1-2) :

-Si(-Z¹-SiR²²₂R²³)₂R^{b1} (S1-1)

-Si(-Z¹-SiR²²₃)₂R^{b1} (S1-2)

In formulae (S1-1) and (S1-2),
Z¹ is each independently a C₁₋₆ alkylene group;
R²² is each independently a hydroxyl group or a group that can be removed by a hydrolysis reaction
R²³ is each independently a C₁₋₆ alkyl group, and preferably a methyl group;
R^{b1} is a C₁₋₆ alkyl group, and preferably a C₁₋₃ alkyl group, such as a methyl group.

In one preferable embodiment, the fluoropolyether group-containing compound of the present disclosure is represented by the following formula (1) or (2):

R^{F1}-X-R^{Si} (1)

R^{Si}-X-R^{F2}-X-R^{Si} (2)

wherein
R^{F1} is Rf¹-R^{F}-O_{q}-;
R^{F2} is -Rf²ₚ-R^{F}-O_{q}-;
p and q are each independently at each occurrence 0 or 1;
Rf¹ is a C₁₋₁₆ perfluoroalkyl group:
Rf² is a C₁₋₆ perfluoroalkylene group, and preferably a C₁₋₃ perfluoroalkylene group;
R^{F} is - (OC₄F₈)_{c}-(OC₃F₆)_{d}-(OC₂F₄)ₑ-(OCF₂)_{f}- wherein c and d are each independently an integer of 0 or more and 30 or less, e and f are each independently an integer of 1 or more and 200 or less, the sum of c, d, e, and f is at least 2, and the occurrence order of each repeating unit enclosed in parentheses provided with a subscript c, d, e, or f is not limited in the formula; and preferably -(OC₂F₄)ₑ-(OCF₂)_{f}-wherein e and f are each independently an integer of 1 or more and 200 or less, preferably 5 or more and 200 or less, and more preferably 10 or more and 200 or less, and the occurrence order of each repeating unit enclosed in parentheses provided with a subscript e or f is not limited in the formula;
In R^{F}, the e/f ratio is 0.20 to 0.95, more preferably 0.20 to 0.90, even more preferably 0.40 to 0.80, particularly preferably 0.50 to 0.80, and further preferably 0.50 to 0.70; preferably, the number average molecular weights of R^{F1} and R^{F2} moieties are 6,000 to 30,000, more preferably 6,000 to 15,000, even more preferably 8,000 to 15,000, and particularly preferably 10,000 to 15,000;
X is represented by - (CH₂)_{z1}-O-(CH₂)_{z2}-;
z1 is an integer of 1 to 6, and z2 is an integer of 1 to 6, and preferably z1 is an integer of 1 to 3, and z2 is an integer of 1 to 4; and
R^{Si} is represented by formula (S1-1) or (S1-2), and preferably formula (S1-2).

In one preferable embodiment, the fluoropolyether group-containing compound of the present disclosure is represented by the following formula (1) or (2):

R^{F1}-X-R^{Si} (1)

R^{Si}-X-R^{F2}-X-R^{Si} (2)

wherein
R^{F1} is Rf¹-R^{F}-O_{q}-;
R^{F2} is -Rf²ₚ-R^{F}-O_{q}-;
p and q are each independently at each occurrence 0 or 1;
Rf¹ is a C₁₋₁₆ perfluoroalkyl group:
   Rf² is a C₁₋₆ perfluoroalkylene group, and preferably a C₁₋₃ perfluoroalkylene group;
   the number average molecular weights of R^{F1} and R^{F2} moieties are 6,000 to 30,000, preferably 8,000 to 15,000, and preferably 10,000 to 15,000;
   R^{F} is preferably -(OC₄F₈)_{c}-(OC₃F₆)_{d}-(OC₂F₄)ₑ-(OCF₂)_{f}- wherein c and d are each independently an integer of 0 or more and 30 or less, e and f are each independently an integer of 1 or more and 200 or less, the sum of c, d, e, and f is at least 2, and the occurrence order of each repeating unit enclosed in parentheses provided with a subscript c, d, e, or f is not limited in the formula; and more preferably - (OC₂F₄)ₑ-(OCF₂)_{f}- wherein e and f are each independently an integer of 1 or more and 200 or less, preferably 5 or more and 200 or less, and more preferably 10 or more and 200 or less, and the occurrence order of each repeating unit enclosed in parentheses provided with a subscript e or f is not limited in the formula;
   In R^{F}, the e/f ratio is preferably 0.20 to 0.95, more preferably 0.20 to 0.90, even more preferably 0.40 to 0.80, and particularly preferably 0.50 to 0.80;
   X is represented by - (CH₂)_{z1}-O-(CH₂)_{z2}-;
   z1 is an integer of 1 to 6, and z2 is an integer of 1 to 6, and preferably z1 is an integer of 1 to 3, and z2 is an integer of 1 to 4; and
   R^{Si} is represented by formula (S1-1) or (S1-2), and preferably formula (S1-2).

The compound represented by formula (1) or formula (2) can be produced by combining known methods.

As one embodiment, a method suitable for producing the fluoropolyether group-containing compound of the present disclosure represented by formula (1) will now be described below, but the method is not limited thereto.

The fluoropolyether group-containing compound of the present disclosure can be produced by, for example, a method comprising reacting a compound represented by formula (1c) with HSiM₃ (wherein M is each independently a halogen atom (i.e., I, Br, Cl, or F) or a C₁₋₆ alkoxy group, preferably a halogen atom, and more preferably Cl) and, as desired, a compound represented by R²²L' (wherein R²² has the same definition as above, and L' represents a group capable of binding to R²²) and/or a compound represented by R²³L" (wherein R²³ has the same definition as above, and L" represents a group capable of binding to R²³).

R^{F1}-R^{z1}-O-R^{z2}-SiR^{b1}(X^{1'}-CH=CH₂)₂ (1c)

In formula (1c), R^{F1}, R^{z1}, R^{z2}, and R^{b1} have the same definitions as R^{F1}, R^{z1}, R^{z2}, and R^{b1} in formula (1), respectively. X^{1'} represents a structure having two fewer carbon atoms than Z¹ of formula (1). -X^{1'}-CH₂CH₂- derived from the structure represented by -X^{1'}-CH=CH₂ corresponds to Z¹ in formula (1).

The above step is preferably carried out in a suitable solvent in the presence of a suitable catalyst.

Examples of the suitable catalyst include, but are not limited to, Pt, Pd, and Rh. Such a catalyst may be in any form, e.g., in the form of a complex.

The suitable solvent is not limited as long as it does not adversely affect the reaction, and examples include 1,3-bis(trifluoromethyl)benzene, perfluorobutyl ethyl ether, perfluorohexyl methyl ether, perfluorohexane, and hexafluorobenzene.

The reaction temperature in the reaction is not limited, and is usually 0 to 100°C and preferably 50 to 80°C; the reaction time is not limited, and is usually 60 to 600 minutes and preferably 120 to 300 minutes; and the reaction pressure is not limited, and is -0.2 to 1 MPa (gauge pressure) and conveniently is ambient pressure.

The compound represented by formula (1c) can be obtained by, but is not limited to, for example, reacting a compound represented by formula (1b), HSiM₂R^{b1}, and Hal-J-X^{1'}-CH=CH₂. Here, M has the same definition as above; R^{b1} has the same definition as R^{b1} in formula (1); Hal represents a halogen atom; J represents Mg, Cu, Pd, or Zn; and X^{1'} represents a bond or a divalent organic group.

R^{F1}-R^{z1}-O-X¹-CH=CH₂ (1b)

In formula (1b), R^{F1} and R^{z1} have the same definitions as R^{F1} and R^{z1} in formula (1), respectively. X¹ represents a structure having two fewer carbon atoms than R^{z2} of formula (1). -X¹-CH₂CH₂- derived from the structure represented by -X¹-CH=CH₂ corresponds to R^{z2} in formula (1).

The above step is preferably carried out in a suitable solvent in the presence of a suitable catalyst.

Examples of the suitable catalyst include, but are not limited to, Pt, Pd, and Rh. Such a catalyst may be in any form, e.g., in the form of a complex.

The suitable solvent is not limited as long as it does not adversely affect the reaction, and examples include 1,3-bis(trifluoromethyl)benzene, perfluorobutyl ethyl ether, perfluorohexyl methyl ether, perfluorohexane, and hexafluorobenzene.

The reaction temperature in the reaction is not limited, and is usually 0 to 100°C and preferably 50 to 80°C; the reaction time is not limited, and is usually 60 to 600 minutes and preferably 120 to 300 minutes; and the reaction pressure is not limited, and is -0.2 to 1 MPa (gauge pressure) and conveniently is ambient pressure.

The compound represented by formula (1b) can be obtained by, but is not limited to, for example, introducing Hal-X¹-CH=CH₂ into the OH group at the terminal of a compound represented by formula (1a). Here, Hal is a halogen atom, such as a Br atom; and X¹ is the same as in X¹ in (1b).

R^{F1}-R^{z1}-OH (1a)

In formula (1a), R^{F1} and R^{z1} are the same as R^{F1} and R^{z1} in formula (1), respectively.

The above step is preferably carried out in a suitable solvent in the presence of a suitable base.

The suitable base is not limited, and examples include lithium hydroxide, sodium hydroxide, potassium hydroxide, sodium hydrogencarbonate, potassium hydrogencarbonate, sodium carbonate, potassium carbonate, and tertiary amines (triethylamine, pyridine, diisopropylethylamine, and 2,6-lutidine). Such a base may be in any form.

The suitable solvent is not limited as long as it does not adversely affect the reaction, and examples include 1,3-bis(trifluoromethyl)benzene, perfluorobutyl ethyl ether, perfluorohexyl methyl ether, perfluorohexane, hexafluorobenzene, diethylene glycol dimethyl ether, and ethylene glycol dimethyl ether. These solvents may be used singly or as a combination.

The reaction temperature in the reaction is not limited, and is usually 0 to 100°C and preferably 50 to 100°C; the reaction time is not limited, and is usually 60 to 600 minutes and preferably 120 to 300 minutes; and the reaction pressure is not limited, and is -0.2 to 1 MPa (gauge pressure) and conveniently is ambient pressure.

The reaction conditions when producing the fluoropolyether group-containing silane compound of the present disclosure can be suitably regulated to a preferable range by those skilled in the art.

Next, the surface-treating agent of the present disclosure will now be described.

The surface-treating agent of the present disclosure contains at least one fluoropolyether group-containing compound represented by formula (1) or formula (2).

In one embodiment, the surface-treating agent of the present disclosure may contain the fluoropolyether group-containing a compound represented by formula (1) and a compound represented by formula (2).

In one embodiment, the lower limit of the ratio (molar ratio) of the fluoropolyether group-containing compound represented by formula (2) to the total of the fluoropolyether group-containing compound represented by formula (1) and the fluoropolyether group-containing compound represented by formula (2) contained in the surface-treating agent of the present disclosure may be preferably 0.001, more preferably 0.002, even more preferably 0.005, yet more preferably 0.01, particularly preferably 0.02, and especially 0.05. The upper limit of the ratio (molar ratio) of the fluoropolyether group-containing compound represented by formula (2) to the total of the fluoropolyether group-containing compound represented by formula (1) and the fluoropolyether group-containing compound represented by formula (2) may be preferably 0.35, more preferably 0.30, even more preferably 0.20, and yet more preferably 0.15 or 0.10. The ratio (molar ratio) of the fluoropolyether group-containing compound represented by formula (2) to the total of the fluoropolyether group-containing compound represented by formula (1) and the fluoropolyether group-containing compound represented by formula (2) is preferably 0.001 or more and 0.30 or less, more preferably 0.001 or more and 0.20 or less, even more preferably 0.002 or more and 0.20 or less (such as 0.15 or less), yet more preferably 0.005 or more and 0.20 or less (such as 0.15 or less), and particularly preferably 0.01 or more and 0.20 or less (such as 0.15 or less), such as 0.02 or more and 0.20 or less (such as 0.15 or less), or 0.05 or more and 0.20 or less (such as 0.15 or less, or 0.10 or less). By containing the fluoropolyether group-containing compound represented by formula (2) in the above range, the surface-treating agent of the present disclosure can contribute to the formation of a cured layer having good friction durability.

In one embodiment, the surface-treating agent of the present disclosure may contain, in addition to the fluoropolyether group-containing compound of the present disclosure (hereinafter, sometimes referred to as "compound (a)"), another fluoropolyether group-containing silane compound (hereinafter, sometimes referred to as "compound (b)").

In one embodiment, as for compound (a) and compound (b), compound (a) is contained in an amount of 70 parts by mass or more, preferably 80 parts by mass or more, more preferably 90 parts by mass or more, and even more preferably 100 parts by mass, based on 100 parts by mass of the fluoropolyether group-containing compound contained in the surface-treating agent. Preferably, compound (a) may be contained in an amount of 80 to 100 parts by mass, and compound (b) may be contained in an amount of 0 to 20 parts by mass, and more preferably, compound (a) may be contained in an amount of 90 to 100 parts by mass, and compound (b) may be contained in an amount of 0 to 10 parts by mass, based on 100 parts by mass of the fluoropolyether group-containing compound contained in the surface-treating agent.

Examples of compound (b) include a compound represented by the following formula (2-1) or (2-2):

R^{F11}-X¹¹-R^{Si} (2-1)

R^{Si}-X¹¹-R^{F21}-x¹¹-R^{Si} (2-2)

wherein
R^{F11} and R^{F21} have the same definitions as R^{F1} and R^{F2} in formula (1) or (2), respectively;
X¹¹ has the same definition as X, and is preferably represented by -(CH₂)_{z1}-O-(CH₂)_{z2}-;
z1 and z2 have the same definitions as above, and are each independently at each occurrence preferably an integer of 1 to 20, more preferably an integer of 1 to 6, and even more preferably an integer of 1 to 4; and
R^{Si} is a group represented by the following formula (S2):

   -SiR^{a11}ₚ₁₁R^{b11}_{q11}R^{c11}ᵣ₁₁ (S2)

   wherein
   R^{a11} is -Z¹²-SiR²¹²ₚ₁₂SiR²²²_{q12}R²³²ᵣ₁₂;
   Z¹² is an oxygen atom or a divalent organic group such as the group referred to as Z¹;
   R²¹² is each independently at each occurrence -Z^{12'}-SiR^{212'}_{p12'}SiR^{222'}_{q12'}R^{232'}_{r12'};
   Z^{12'} is an oxygen atom or a divalent organic group such as the group referred to as Z¹;
   R^{212'} is each independently at each occurrence -Z^{12''}-SiR^{222"}_{q12"}R^{232"}_{r12"};
   Z^{12"} is an oxygen atom or a divalent organic group such as the group referred to as Z¹;
   R^{222"} is each independently at each occurrence a hydroxyl group or a hydrolyzable group;
   R^{232"} is each independently at each occurrence a hydrogen atom or a monovalent organic group;
   q12" is each independently at each occurrence an integer of 0 to 3;
   r12" is each independently at each occurrence an integer of 0 to 3;
   R^{222'} is each independently at each occurrence a hydroxyl group or a hydrolyzable group;
   R^{232'} is each independently at each occurrence a hydrogen atom or a monovalent organic group;
   p12' is each independently at each occurrence an integer of 0 to 3;
   q12' is each independently at each occurrence an integer of 0 to 3;
   r12' is each independently at each occurrence an integer of 0 to 3;
   R²²² is each independently at each occurrence a hydroxyl group or a hydrolyzable group;
   R²³² is each independently at each occurrence a hydrogen atom or a monovalent organic group;
   p12 is each independently at each occurrence an integer of 0 to 3;
   q12 is each independently at each occurrence an integer of 0 to 3;
   r12 is each independently at each occurrence an integer of 0 to 3;
   R^{b11} is each independently at each occurrence a hydroxyl group or a hydrolyzable group;
   R^{c11} is each independently at each occurrence a hydrogen atom or a monovalent organic group;
   p11 is each independently at each occurrence an integer of 0 to 3;
   q11 is each independently at each occurrence an integer of 0 to 3; and
   r11 is each independently at each occurrence an integer of 0 to 3;
   provided that at least one R^{b11}, R²²² , R^{222'}, or R^{222"} exists for each group represented by R^{Si}; and
   the compounds represented by formulae (1) and (2) are excluded.

The sum of p11, q11, and r11 is 3 for each group represented by (SiR^{a11}ₚ₁₁R^{b11}_{q11}R^{c11}ᵣ₁₁); the sum of p12, q12, and r12 is 3 for each group represented by (SiR²¹²ₚ₁₂R²²²_{q12}R²³²ᵣ₁₂); the sum of p12', q12', and r12' is 3 for each group represented by (SiR^{212'}_{p12'}R^{222'}_{q12'}R^{232'}_{r12'}); and the sum of q12" and r12" is 3 for each group represented by (SiR^{222"}_{q12''}R^{232"}_{r12"}).

The surface-treating agent of the present disclosure is capable of imparting water-repellency, oil-repellency, antifouling properties, surface slickness, and friction durability to a substrate, and can be suitably used as, but is not limited to, an antifouling coating agent or a waterproof coating agent.

The surface-treating agent of the present disclosure may further contain a solvent, a (non-reactive) fluoropolyether compound that can be understood as a fluorine-containing oil or preferably a perfluoro(poly)ether compound (hereinafter, collectively referred to as a "fluorine-containing oil"), a (non-reactive) silicone compound that can be understood as a silicone oil (hereinafter, referred to as "silicone oil"), a catalyst, a surfactant, a polymerization inhibitor, a sensitizer, and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

The fluorine-containing oil is not limited, and examples include compounds (perfluoro(poly)ether compounds) represented by general formula (3) below:

Rf⁵-(OC₄F₈)_{a'}-(OC₃F₆)_{b'}-(OC₂F₄)_{c'}-(OCF₂)_{d'}-Rf⁶ ... (3)

wherein Rf⁵ represents a C₁₋₁₆ alkyl group optionally substituted with one or more fluorine atoms (preferably a C₁₋₁₆ perfluoroalkyl group), Rf⁶ represents a C₁₋₁₆ alkyl group optionally substituted with one or more fluorine atoms (preferably a C₁₋₁₆ perfluoroalkyl group), a fluorine atom, or a hydrogen atom, and Rf⁵ and Rf⁶ are more preferably each independently a C₁₋₃ perfluoroalkyl group.
a', b', c', and d' respectively represent the numbers of 4 repeating units of perfluoro (poly) ether constituting the main backbone of the polymer and are mutually independently an integer of 0 or more and 300 or less, and the sum of a', b', c', and d' is at least 1, preferably 1 to 300, and more preferably 20 to 300. The occurrence order of each repeating unit enclosed in parentheses provided with a subscript a', b', c', or d' is not limited in the formula. Among these repeating units, -(OC₄F₈)- may be any of -(OCF₂CF₂CF₂CF₂)-, - (OCF (CF₃)CF₂CF₂)-, -(OCF₂CF(CF₃)CF₂)-, -(OCF₂CF₂CF(CF₃)) -, - (OC(CF₃)₂CF₂)-, - (OCF₂C(CF₃)₂)-, - (OCF (CF₃)CF (CF₃))-, - (OCF (C₂F₅)CF₂)-, and (OCF₂CF(C₂F₅)) -, and is preferably - (OCF₂CF₂CF₂CF₂)-. - (OC₃F₆)- may be any of - (OCF₂CF₂CF₂)-, - (OCF(CF₃)CF₂)-, and -(OCF₂CF(CF₃))-, and is preferably - (OCF₂CF₂CF₂)-. -(OC₂F₄)- may be any of -(OCF₂CF₂)- and - (OCF (CF₃))-, and is preferably -(OCF₂CF₂)-.

Examples of the perfluoro(poly)ether compound represented by general formula (3) include compounds represented by any of general formulae (3a) and (3b) below (which may be used singly or as a mixture of two or more):

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (3b)

In these formulae, Rf⁵ and Rf⁶ are as described above; in formula (3a), b" is an integer of 1 or more and 100 or less; and in formula (3b), a'' and b'' are each independently an integer of 0 or more and 30 or less, and c" and d'' are each independently an integer of 1 or more and 300 or less. The occurrence order of each repeating unit enclosed in parentheses provided with a subscript a", b", c", or d" is not limited in the formulae.

From another viewpoint, the fluorine-containing oil may be a compound represented by general formula Rf³-F wherein Rf³ is a C₅₋₁₆ perfluoroalkyl group. The fluorine-containing oil may be a chlorotrifluoroethylene oligomer.

The fluorine-containing oil may have an average molecular weight of 500 to 10,000. The molecular weight of the fluorine-containing oil may be measured using gel permeation chromatography (GPC).

The fluorine-containing oil may be contained in an amount of, for example, 0 to 50 mass%, preferably 0 to 30 mass%, and more preferably 0 to 5 mass%, based on the composition of the present disclosure. In one embodiment, the composition of the present disclosure is substantially free of the fluorine-containing oil. Being substantially free of the fluorine-containing oil means that the fluorine-containing oil is not contained at all, or an extremely small amount of the fluorine-containing oil may be contained.

The fluorine-containing oil contributes to increasing the surface slicknessity of a layer formed of the composition of the present disclosure.

For example, the silicone oil may be linear or cyclic silicone oil having 2,000 or fewer siloxane bonds. The linear silicone oil may be so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the composition of the present disclosure (for example, a surface-treating agent), such silicone oil may be contained in an amount of, for example, 0 to 300 parts by mass, and preferably 50 to 200 parts by mass, based on total 100 parts by mass of the fluoropolyether group-containing silane compound of the present disclosure (in the case of two or more kinds, the total thereof, and the same applies below).

Silicone oil contributes to increasing the surface slickness of the surface-treating layer.

Examples of the catalyst include acids such as acetic acid and trifluoroacetic acid, bases such as ammonia, triethylamine, and diethylamine, and transition metals such as Ti, Ni, and Sn.

The catalyst promotes hydrolysis and dehydrative condensation of the fluoropolyether group-containing silane compound of the present disclosure, and promotes formation of a layer formed of the composition of the present disclosure (for example, a surface-treating agent).

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure can be used as a surface-treating agent for surface treatment of a substrate.

The surface-treating agent of the present disclosure can be formed into pellets by impregnating with the composition a porous material such as a porous ceramic material or a metal fiber such as a fiber obtained by, for example, solidifying steel wool in a cotton-like form. Such pellets can be used in, for example, vacuum deposition.

Below, the article of the present disclosure will now be described.

The article of the present disclosure contains a substrate and a layer (a surface-treating layer) on the surface of the substrate, wherein the layer is formed of the fluoropolyether group-containing silane compound of the present disclosure or a surface-treating agent containing the fluoropolyether group-containing silane compound (hereinafter, these are simply referred to as "the surface-treating agent of the present disclosure" collectively).

The substrate usable herein may be composed of any suitable material such as glass, resin (which may be natural or synthetic resin such as a commonly used plastic material, and may be in the form of a plate, a film, or the like), metal, ceramics, semiconductors (such as silicon and germanium), fiber (such as woven fabric and nonwoven fabric), fur, leather, wood, pottery, stone, and building materials.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (e.g., as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited. The surface region of the substrate on which a surface-treating layer is to be formed is at least a part of the substrate surface, and may be suitably determined according to the application, specific configuration, and the like of an article to be produced.

The substrate, or at least the surface portion thereof, may be composed of a material originally having a hydroxyl group. Examples of the material include glass as well as metal (in particular, base metal) wherein a natural oxidized film or a thermal oxidized film is formed on the surface, ceramics, semiconductors, and the like. Alternatively, when the substrate has an insufficient amount of a hydroxyl group or when the substrate originally does not have a hydroxyl group as in resin and the like, a pre-treatment may be performed on the substrate to thereby introduce or increase a hydroxyl group on the surface of the substrate. Examples of such a pre-treatment include a plasma treatment (e.g., corona discharge) and ion beam irradiation. The plasma treatment can be suitably utilized to not only introduce or increase a hydroxyl group on the substrate surface, but also clean the substrate surface (remove foreign matter and the like). Another example of such a pre-treatment includes a method wherein a monolayer of a surface adsorbent having a carboncarbon unsaturated bonding group is formed on the surface of the substrate by a LB method (a Langmuir-Blodgett method), a chemical adsorption method, or the like beforehand, and, thereafter, cleaving the unsaturated bond under an atmosphere containing oxygen, nitrogen, or the like.

Alternatively, the substrate, or at least on a surface portion thereof, may be composed of a silicone compound having one or more other reactive groups such as a Si-H group, or a material containing alkoxysilane.

Then, a layer of the surface-treating agent of the present disclosure is formed on the surface of the substrate, this layer is post-treated as necessary, and thereby a layer is formed from the surface-treating agent of the present disclosure.

The layer of the surface-treating agent of the present disclosure can be formed by applying the above composition on the surface of the substrate such that the composition coats the surface. The coating method is not limited. For example, a wet coating method and a dry coating method can be used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, electron beam, high-frequency heating using microwave or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd., and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be straight or branched) such as hydrofluoroether (HFE) (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent of the present disclosure may be directly subjected to the dry coating method, or may be diluted with the above solvent before being subjected to the dry coating method.

A layer of the surface-treating agent is preferably formed such that the surface-treating agent of the present disclosure coexists with a catalyst for hydrolysis and dehydrative condensation in the layer. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used in a deposition (usually vacuum deposition) treatment, or a pellet-like material may be used in a deposition (usually vacuum deposition) treatment, wherein the pellets are obtained by impregnating a porous body of metal such as iron or copper with the surface-treating agent of the present disclosure to which a catalyst has been added.

The catalyst may be any suitable acid or base. The acid catalyst may be, for example, acetic acid, formic acid, or trifluoroacetic acid. The base catalyst may be, for example, ammonia or organic amine.

In the above-described manner, a layer derived from the surface-treating agent of the present disclosure is formed on the substrate surface, and the article of the present disclosure is produced. The layer thus obtained has both high surface slickness and high friction durability. The layer may have not only high friction durability but also have, depending on the formulation of the surface-treating agent used, water-repellency, oil-repellency, antifouling properties (e.g., preventing grime such as fingerprints from adhering), waterproof properties (preventing water from entering electronic components and the like), surface slickness (or lubricity, for example, such as removability by wiping of grim such as fingerprints, and excellent tactile sensations to the fingers), and the like, and may be suitably used as a functional thin film.

That is to say, the present disclosure further relates to an optical material having a layer derived from the surface-treating agent as the outermost layer.

The optical material preferably includes a wide variety of optical materials in addition to optical materials relating to displays and the like as exemplified below: for example, displays such as cathode ray tubes (CRTs; e.g., PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article having a layer obtained according to the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The article having a layer obtained according to the present disclosure may be an automobile interior/exterior material. Examples of exterior materials include windows, light covers, and aftermarket camera covers. Examples of interior materials include instrument panel covers, navigation system touch panels, and decorative interior materials.

The article having a layer obtained according to the present disclosure may be medical equipment or a medical material.

The thickness of the layer is not limited. The thickness of the layer in the case of an optical member is in the range of 1 to 50 nm, 1 to 30 nm, and preferably 1 to 15 nm, from the viewpoint of optical performance, surface slickness, friction durability, and antifouling properties.

Embodiments have been described above, but it will be understood that various modifications can be made to embodiments and details without departing from the scope of the claims.

### Examples

The present disclosure will now be described more specifically by way of the Examples below, but the present disclosure is not limited to the Examples. In the Examples, all chemical formulae shown below indicate average compositions, and the occurrence order of repeating units (such as (OCF₂CF₂) and (OCF₂)) constituting perfluoropolyether is not limited.

### (Synthetic Example 1)

First, 6.0 g of a mixture of CF₃ -(OCF₂CF₂)ₘ-(OCF₂)ₙ-CH₂OH (m≈49, n≈82) and HOCH₂CF₂-(OCF₂CF₂)ₘ-(OCF₂)ₙ-CH₂OH (m≈49, n≈82) (provided that the content of HOCH₂CF₂- (OCF₂CF₂)ₘ- (OCF₂)ₙ-CH₂OH was 6 mol%) was dissolved in 6.0 g of 1,3-bis(trifluoromethyl)benzene. The reaction solution was heated to 80°C, 1.0 g of sodium hydroxide was added, and the mixture was stirred for 2 hours. Then, 0.5 g of allyl bromide dissolved in 3.0 g of 1,3-bis(trifluoromethyl) benzene was added dropwise, and the mixture was stirred for 4 more hours. The end point of the reaction was confirmed by ¹⁹F-NMR according to that the chemical shift of -CF₂- at the hydroxyl group β position of CF₃(OCF₂CF₂)ₘ- (OCF₂)ₙ-CH₂OH shifted to a low magnetic field. The lower layer separated by adding 1 N hydrochloric acid to the reaction solution was washed with water, dried over magnesium sulfate, and concentrated. The resulting concentrate was dissolved in perfluorohexane and washed with acetone three times, and thus a mixture containing a polyether group-containing compound (A) and a polyether group-containing compound (A') was obtained.
Polyether group-containing compound (A):

   CF₃(OCF₂CF₂)ₘ(OCF₂)ₙ-CH₂OCH₂CH=CH₂ (m≈49, n≈82)
Polyether group-containing compound (A'):

   CH₂=CHCH₂OCH₂-CF₂(OCF₂CF₂)ₘ(OCF₂)ₙ-CH₂O CH₂CH=CH₂

   (m≈49, n≈82)

### (Synthetic Example 2)

First, 5.0 g of the mixture obtained in Synthetic Example 1 was dissolved in 10 ml of 1,3-bis(trifluoromethyl)benzene, then 0.02 g of triacetoxymethylsilane and 0.06 ml of a xylene solution containing a 2% Pt complex of 1,3-divinyl-1,1,3,3-tetramethyldisiloxane were added, 1.0 g of methyldichlorosilane was added, and the mixture was stirred at 10°C for 30 minutes. Subsequently, the mixture was heated to 60°C and stirred for 4 hours. After confirming that the proton at the allyl position was no longer observed by ¹H-NMR, volatile matter was distilled off under reduced pressure. This reaction solution was ice-cooled, 3.0 ml of allyl magnesium bromide (about 0.7 mol/L diethyl ether solution) was added dropwise, and the mixture was reacted overnight at room temperature. The lower layer separated by adding 1 N hydrochloric acid to the reaction solution was washed with water, dried over magnesium sulfate, and concentrated. The resulting concentrate was dissolved in perfluorohexane and washed with acetone three times, and thus a mixture containing a polyether group-containing compound (B) and a polyether group-containing compound (B') was obtained.
Polyether group-containing compound (B): 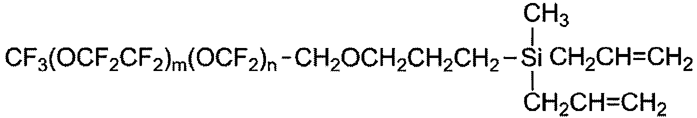 (m≈49, n≈82)
Polyether group-containing compound (B'): 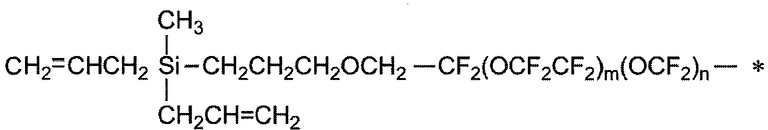 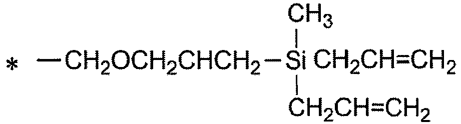 (m≈49, n≈82)

### (Synthetic Example 3)

First, 5.0 g of the mixture obtained in Synthetic Example 2 was dissolved in 10 ml of 1,3-bis(trifluoromethyl)benzene, then 0.02 g of triacetoxymethylsilane and 0.06 ml of a xylene solution containing a 2% Pt complex of 1,3-divinyl-1,1,3,3-tetramethyldisiloxane were added, 1.0 g of trichlorosilane was added, and the mixture was stirred at 10°C for 30 minutes. Subsequently, the mixture was heated to 60°C and stirred for 4 hours. Thereafter, volatiles were distilled off under reduced pressure, then a mixed solution of 0.1 g of methanol and 3.0 g of trimethyl orthoformate was added, and the mixture was heated to 60°C and stirred for 3 hours. Thereafter, purification was performed, and thus 4.7 g of a mixture containing the following polyether group-containing compound (C) and polyether group-containing compound (C') having trimethoxysilyl groups at terminals was obtained.
Polyether group-containing compound (C): 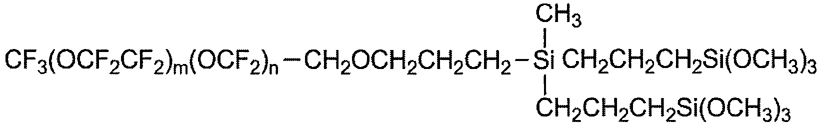 (m≈49, n≈82)
Polyether group-containing compound (C'): 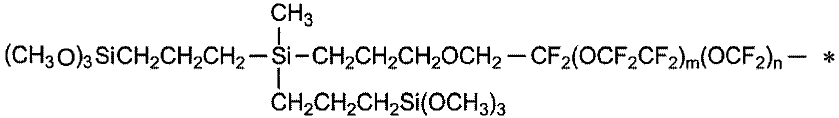 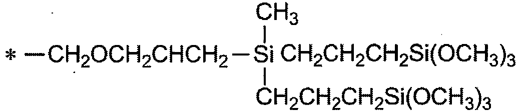 (m≈49, n≈82)

### (Synthetic Example 4)

The same operations as in Synthetic Example 1 were carried out except that 6.0 g of a mixture of CF₃-(OCF₂CF₂)ₘ-(OCF₂)ₙ-CH₂OH (m≈54, n≈90) and HOCH₂CF₂-(OCF₂CF₂)ₘ-(OCF₂)ₙ-CH₂OH (m≈54, n≈90) (provided that the content of HOCH₂CF₂-(OCF₂CF₂)ₘ-(OCF₂)ₙ-CH₂OH was 8 mol%) was used, and thus 6.0 g of a mixture containing a polyether group-containing compound (D) and a polyether group-containing compound (D') was obtained.
Polyether group-containing compound (D):

   CF₃(OCF₂CF₂)ₘ(OCF₂)ₙ-CH₂OCH₂CH=CH₂

   (m≈54, n≈90)
Polyether group-containing compound (D'):

   CH₂=CHCH₂OCH₂-CF₂(OCF₂CF₂)ₘ(OCF₂)ₙ-CH₂O CH₂CH=CH₂

   (m≈54, n≈90)

### (Synthetic Example 5)

The same operations as in Synthetic Example 2 were carried out except that 5.8 g of the mixture obtained in Synthetic Example 4 was used, and thus 5.8 g of a mixture containing a polyether group-containing compound (E) and a polyether group-containing compound (E') was obtained.
Polyether group-containing compound (E): 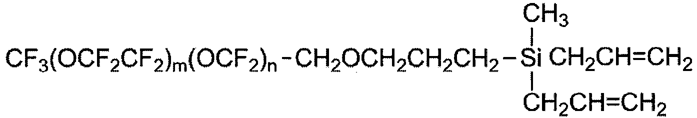 (m≈54, n≈90)
Polyether group-containing compound (E'): 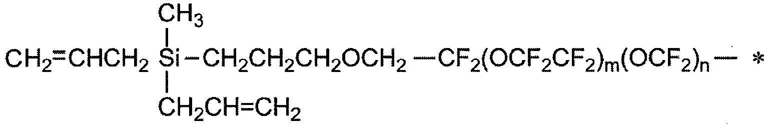 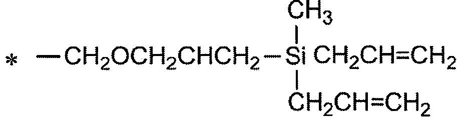 (m≈54, n≈90)

### (Synthetic Example 6)

The same operations as in Synthetic Example 3 were carried out except that 5.8 g of the mixture obtained in Synthetic Example 5 was used, and thus 5.9 g of a mixture containing a polyether group-containing compound (F) and a polyether group-containing compound (F') was obtained.
Polyether group-containing compound (F): 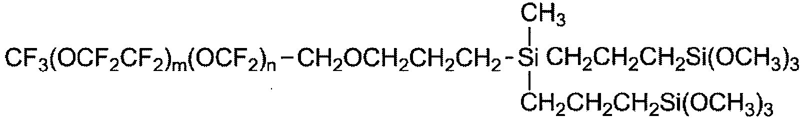 (m≈54, n≈90)
Polyether group-containing compound (F'): 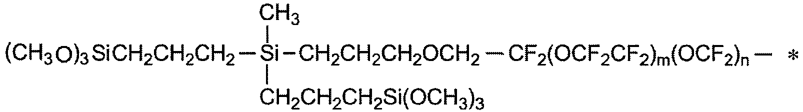 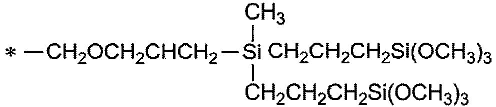 (m≈54, n≈90)

### (Synthetic Example 7)

The same operations as in Synthetic Example 1 were carried out except that 6.0 g of a mixture of CF₃-(OCF₂CF₂)ₘ-(OCF₂)ₙ-CH₂OH (m≈17, n≈28) and HOCH₂CF₂-(OCF₂CF₂)ₘ-(OCF₂)ₙ-CH₂OH (m≈17, n≈28) (provided that the content of HOCH₂CF₂-(OCF₂CF₂)ₘ-(OCF₂)ₙ-CH₂OH was 4 mol%) was used, and thus 5.6 g of a mixture containing a polyether group-containing compound (G) and a polyether group-containing compound (G') was obtained.
Polyether group-containing compound (G):

   CF₃(OCF₂CF₂)ₘ(OCF₂)ₙ-CH₂OCH₂CH=CH₂

   (m≈17, n≈28)
Polyether group-containing compound (G'):

   CH₂=CHCH₂OCH₂-CF₂(OCF₂CF₂)ₘ(OCF₂)ₙ-CH₂OCH₂CH=CH₂

   (m≈17, n≈28)

### (Synthetic Example 8)

The same operations as in Synthetic Example 2 were carried out except that 5.5 g of the mixture obtained in Synthetic Example 7 was used, and thus 5.3 g of a mixture containing a polyether group-containing compound (H) and a polyether group-containing compound (H') was obtained.
Polyether group-containing compound (H): 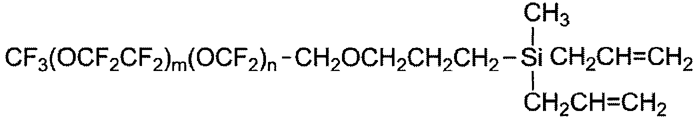 (m≈17, n≈28)
Polyether group-containing compound (H'): 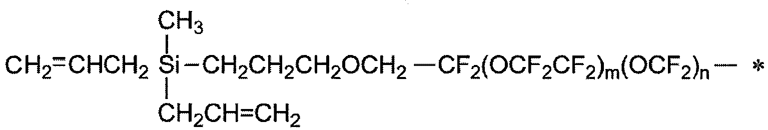 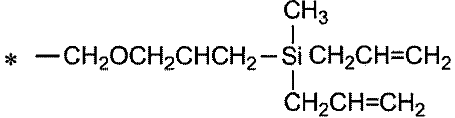 (m≈17, n≈28)

### (Synthetic Example 9)

The same operations as in Synthetic Example 3 were carried out except that 5.0 g of the mixture obtained in Synthetic Example 8 was used, and thus 4.9 g of a mixture containing a polyether group-containing compound (I) and a polyether group-containing compound (I') was obtained.
Polyether group-containing compound (I): 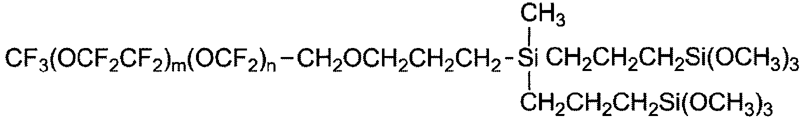 (m≈17, n≈28)
Polyether group-containing compound (I'): 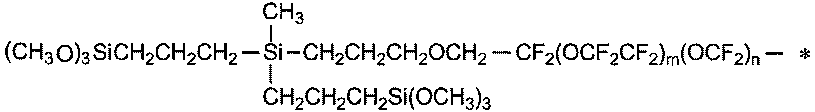 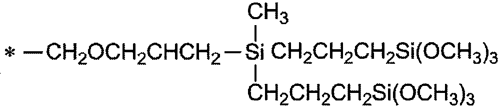 (m≈17, n≈28)

### (Synthetic Example 10)

The same operations as in Synthetic Example 1 were carried out except that 6.0 g of a mixture of CF₃-(OCF₂CF₂) ₘ-(OCF₂)ₙ-CH₂OH (m≈26, n≈24) and HOCH₂CF₂- (OCF₂CF₂) ₘ-(OCF₂)ₙ-CH₂OH(m≈26, n≈24) (provided that the content of HOCH₂CF₂-(OCF₂CF₂)ₘ-(OCF₂)ₙ-CH₂OH was 11 mol%) was used, and thus 5.8 g of a mixture containing a polyether group-containing compound (J) and a polyether group-containing compound (J') was obtained.
Polyether group-containing compound (J):

   CF₃(OCF₂CF₂)ₘ(OCF₂)ₙ-CH₂OCH₂CH=CH₂

   (m≈26, n≈24)
Polyether group-containing compound (J'):

   CH₂=CHCH₂OCH₂-CF₂(OCF₂CF₂)ₘ(OCF₂)ₙ-CH₂O CH₂CH=CH₂

   (m≈26 , n≈24)

### (Synthetic Example 11)

The same operations as in Synthetic Example 2 were carried out except that 5.0 g of the mixture obtained in Synthetic Example 10 was used, and thus 4.9 g of a mixture containing a polyether group-containing compound (K) and a polyether group-containing compound (K') was obtained.
Polyether group-containing compound (K): 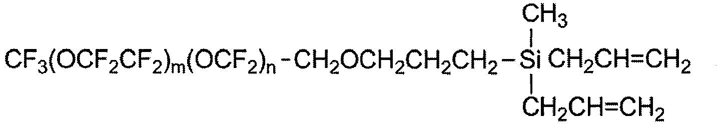 (m≈26, n≈24)
Polyether group-containing compound (K'): 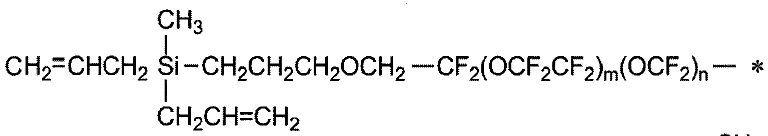 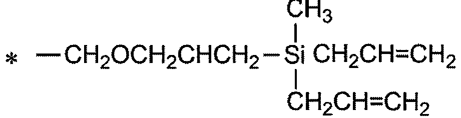 (m≈26, n≈24)

### (Synthetic Example 12)

The same operations as in Synthetic Example 3 were carried out except that 4.5 g of the mixture obtained in Synthetic Example 11 was used, and thus 4.4 g of a mixture containing a polyether group-containing compound (L) and a polyether group-containing compound (L') was obtained.
Polyether group-containing compound (L): 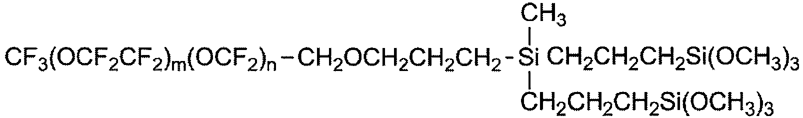 (m≈26, n≈24)
Polyether group-containing compound (L'): 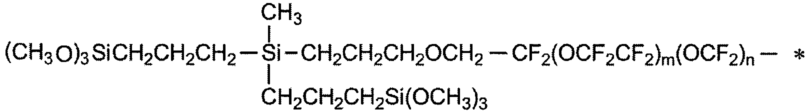 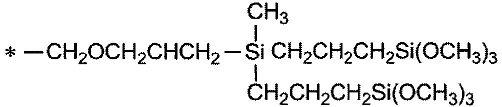 (m≈26, n≈24)

### (Example 1)

The mixture obtained in Synthetic Example 3 was dissolved in hydrofluoroether (Novec HFE-7300, manufactured by 3M) so as to have a concentration of 0.1 mass%, and thus a surface-treating agent (1) was prepared.

### (Example 2)

The mixture obtained in Synthetic Example 6 was dissolved in hydrofluoroether (Novec HFE-7300, manufactured by 3M) so as to have a concentration of 0.1 mass%, and thus a surface-treating agent (2) was prepared.

### (Example 3)

The mixture obtained in Synthetic Example 9 was dissolved in hydrofluoroether (Novec HFE-7300, manufactured by 3M) so as to have a concentration of 0.1 mass%, and thus a surface-treating agent (3) was prepared.

### (Example 4)

The mixture obtained in Synthetic Example 12 was dissolved in hydrofluoroether (Novec HFE-7300, manufactured by 3M) so as to have a concentration of 0.1 mass%, and thus a surface-treating agent (4) was prepared.

### (Comparative Examples 1 to 4)

Comparative surface-treating agents (1) to (4) were prepared in the same manner as in Example 2 except that the following control compounds (1) to (4) were used, respectively, in place of the mixture obtained in Synthetic Example 6.

Control Compound (1) CF₃CF₂CF₂-(OCF₂CF₂CF₂)-OCF₂CF₂CH₂OCH₂CH₂CH₂Si(OCH₃)₃

Control Compound (2) CF₃CF₂CF₂CF₂CF₂CF₂CH₂CH₂Si(OCH₂CH₃)₃

Control Compound (3) CF₃CF₂CF₂-(OCF₂CF₂CF₂)₂₃-OCF₂CF₂CH₂OCH₂CH₂CH₂Si(CH₂CH₂CH₂Si(OCH₃)_{2.2})(OCH₃)_{0.8}

Control Compound (4) CF₃CF₂(OCF₂CF(CF₃))₂₅OCF₂CON(CH₂CH₂CH₂Si(OCH₃)₃)₂

### (Static contact angle)

The static contact angle was measured by the following method using a fully automatic contact angle meter DropMaster 700 (manufactured by Kyowa Interface Science Co., Ltd.).

### <Method for measuring static contact angle>

The static contact angle was obtained by dripping 2 µL of water from a microsyringe onto a horizontally placed substrate and taking a still image with a video microscope 1 second after the dripping.

### (Formation of cured film)

The surface-treating agents (1) to (4) and the comparative surface-treating agents (1) to (4) were used to form cured films as follows.

A surface-treating agent or a comparative surface-treating agent was applied to a chemically tempered glass ("Gorilla" glass, manufactured by Corning Incorporated, thickness 0.7 mm) using a spin coater.

The spin coating conditions were 300 rpm for 3 seconds and 2000 rpm for 30 seconds.

The coated glass was heated at 150°C for 30 minutes in a thermostatic oven in air to form a cured film.

### [Evaluation of cured film properties]

Properties of the resulting cured film were evaluated as follows.

### <Static contact angle>

### (Initial evaluation)

First, as an initial evaluation, after the formation of the cured film, the static water contact angle of the surface with which nothing had been brought into contact yet was measured.

### (Evaluation after wiping with ethanol)

Next, the cured film was wiped back and forth five times with Kimwipe (trade name, manufactured by Jujo Kimberly Co., Ltd.) sufficiently soaked with ethanol, and dried. The static water contact angle of the cured film after being dried was measured.

### <Fingerprint adherability and removability by wiping>

### (Fingerprint adherability)

A finger was pressed against a cured film formed using a surface-treating agent or a comparative surface-treating agent, and how easily a fingerprint adhered was visually judged. Evaluations were made according to the following criteria:
A: Fingerprint unlikely adhered, or not noticeable even when adhered.
B: Adhered fingerprint was little, but fingerprint sufficiently confirmed.
C: Fingerprint adhered as clearly as fingerprint on untreated glass substrate.

### (Fingerprint removability by wiping)

After the fingerprint adherability test, the adhered fingerprint was wiped back and forth five times with Kimwipe (trade name, manufactured by Jujo Kimberly Co., Ltd.), and how easily the adhered fingerprint was wiped off was visually judged. Evaluations were made according to the following criteria:
A: Fingerprint completely wiped off.
B: Fingerprint wiping marks remained.
C: Fingerprint wiping marks spread, and difficult to remove.

The results of the series of evaluations are summarized in Table 1 below.

**[Table 1]**

| Treating agent | | Contact angle (degree) | | Fingerprint adherability and removability by wiping | |
|---|---|---|---|---|---|
| | | Initial evaluatio n | After wiping with ethanol | Fingerprint adherability | Fingerprint removability by wiping |
| Surface-treating agent (1) | Examiple 1 | 114 | 114 | A | A |
| Surface-treating agent (2) | Examiple 2 | 114 | 114 | A | A |
| Surface-treating agent (3) | Examiple 3 | 115 | 115 | A | A |
| Surface-treating agent (4) | Examiple 4 | 114 | 114 | A | A |
| Comparative surface-treating agent (1) | Comparative Example 1 | 113 | 112 | A | B |
| Comparative surface-treating agent (2) | Comparative Example 2 | 105 | 103 | B | C |
| Comparative surface-treating agent (3) | Comparative Example 3 | 114 | 114 | A | A |
| Comparative surface-treating agent (4) | Comparative Example 4 | 111 | 111 | B | B |

The contact angles of the cured films formed using the surface-treating agents (1) to (4) did not decrease even when the films were wiped using ethanol. On the other hand, the contact angles of the cured films formed using the comparative surface-treating agents (1), (2), and (4) decreased when the films were wiped using ethanol. This is considered to be because the cured films formed of the comparative surface-treating agents (1) and (2) have poor chemical resistance (durability against solvent).

### [Evaluation of friction durability of cured films]

The friction durability of the resulting cured films was evaluated as follows.

### <Eraser friction durability test>

Using a rubbing tester (manufactured by Shinto Scientific Co., Ltd.), the water-resisting contact angle was measured every 2,500 times of rubbing under the following conditions, and the test was continued until reaching 10,000 times or a contact angle of less than 100 degrees. The test environment conditions were 25°C and a humidity of 40% RH.
Eraser: Raber Eraser (manufactured by Minoan)
Ground contact area: 6 mmϕ
Travel distance (one way): 30 mm
Travel speed: 3,600 mm/min
Load: 1 kg/6 mmϕ

The results of the above evaluation are summarized in Table 2 below. In the table, "-" means that no measurement was performed.

**[Table 2]**

| Treating agent | | Number of times eraser was rubbed | | | | |
|---|---|---|---|---|---|---|
| | | 0 times | 2500 times | 5000 times | 7500 times | 10000 times |
| Surface-treating agent (1) | Example 1 | 114 | 115 | 116 | 113 | 101 |
| Surface-treating agent (2) | Example 2 | 114 | 113 | 112 | 113 | 107 |
| Surface-treating agent (3) | Example 3 | 115 | 114 | 110 | 102 | 88 |
| Surface-treating agent (4) | Example 4 | 114 | 113 | 108 | 84 | - |
| Comparative Surface-treating agent (1) | Comparative Example 1 | 113 | 89 | - | - | - |
| Comparative Surface- . treating agent (3) | Comparative Example 3 | 114 | 102 | 81 | - | - |
| Comparative Surface-treating agent (4) | Comparative Example 4 | 111 | 87 | - | - | - |

### Industrial Applicability

The fluoropolyether group-containing compound of the present disclosure can be suitably used to form a surface-treating layer on the surfaces of a wide variety of substrates or, in particular, optical members that require friction durability.

## Claims

1. A compound, which is a fluoropolyether group-containing compound of formula (1) or (2):
Rf¹-R^{F}-O_{q}-X-R^{Si} (1)
R^{Si}-X-Rf²ₚ-R^{F}-O_{q}-X-R^{Si} (2)
wherein
Rf¹ is C₁₋₁₆-alkyl optionally substituted with F;
Rf² is C₁₋₆-alkylene optionally substituted with F;
R^{F} is a group of the formula: -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-Wherein a-f each independently are an integer of 0-200, with (a+b+c+d+e+f) ≥ 1, and the order of repeating units enclosed in parentheses provided with a, b, c, d, e, or f is not limited;
R^{Fa} each independently is H, F or Cl;
p is 0 or 1;
q is 0 or 1;
X each independently is a group -(CH₂)_{z1}-O-R^{z2}-, wherein z1 is an integer of 0-20,
R²² is -(CH₂)_{z2}- optionally substituted with C₁₋₆-alkyl or a cyclic alkyl group optionally containing one or more N, O, S or Si, or with perfluoroalkyl; and z2 is an integer of 0-20;
R^{Si} each independently is -SiR^{a1}₂R^{b1} (S1), wherein
R^{a1} is -Z¹-SiR²²_{q1}R²³ᵣ₁;
Z¹ each independently is C₁₋₆-alkylene, - (CH₂)_{z11}-O-(CH₂)_{z12}- or -(CH₂)_{z13}-phenylene-(CH₂)_{z14}-, wherein z11 and z12 each independently are an integer of 1-6 and z13 and z14 each independently are an integer of 0-6;
R²² each independently is OH or a group that can be removed by a hydrolysis reaction;
R²³ each independently is H or a monovalent organic group;
q1 is an integer of 1-3;
r1 is an integer of 0-2; and
R^{b1} is C₁₋₆-alkyl.

2. The compound of claim 1, wherein z1 each independently is an integer of 1-20, and z2 each independently is an integer of 1-20.

3. The compound of claim 1 or 2, wherein Z¹ each independently is C₁₋₆-alkylene.

4. The compound of any of claims 1-3, wherein q1 is 2 or 3.

5. The compound of any of claims 1-4, wherein R^{Fa} is F.

6. The compound of any of claims 1-5, wherein R^{F} is a group selected from the formulae (f1)-(f5):
-(OC₃F₆)_{d}- (f1)
wherein d is an integer of 1 to 200;
-(OC₄F₈)_{c}-(OC₃F₆)_{d}-(OC₂F₄)ₑ-(OCF₂)_{f}- (f2)
wherein c and d each independently are an integer of 0-30, e and f each independently are an integer of 1-200, with (c+d+e+f) ≥ 2, and the order of repeating units enclosed in parentheses provided with a subscript c, d, e, or f is not limited;
- (R⁶-R⁷)_{g}- (f3)
wherein R⁶ is OCF₂ or OC₂F₄, R⁷ is a OC₂F₄, OC₃F₆, OC₄F₈, OC₅F₁₀ or OC₆F₁₂, or a combination of two or three groups independently selected from these groups, and g is an integer of 2-100;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1-200, a, b, c, d and f each independently are an integer of 0-200, with (a+b+c+d+e+f) ≥ 1, and the order of repeating units enclosed in parentheses provided with a, b, c, d, e, or f is not limited; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein f is an integer of 1-200, a-e each independently are an integer of 0-200, with (a+b+c+d+e+f) ≥ 1, and the order of repeating units enclosed in parentheses provided with a, b, c, d, e, or f is not limited.

7. The compound of any of claims 1-6, wherein R^{F} has a number average molecular weight of 6,000-30,000 measured by ¹⁹F-NMR.

8. The compound of any of claims 1-7, wherein R^{F} is a group of the formula (f2).

9. The compound of any of claims 1-8, wherein the ratio e/f is < 1.0.

10. A surface-treating agent comprising the compound of any of claims 1-9.

11. The surface-treating agent of claim 10, further comprising one or more other components selected from a fluorine-containing oil, a silicone oil, and a catalyst.

12. The surface-treating agent of claim 10 or 11, further comprising a solvent.

13. The use of the surface-treating agent of any of claims 10-12 for vacuum deposition and/or as an antifouling coating agent or water-proof coating agent.

14. A pellet comprising the surface-treating agent of any of claims 10-13.

15. An article, preferably an optical member, comprising a substrate and, on a surface thereof, a layer formed of the compound of any of claims 1-9 or the surface-treating agent of any of claims 10-13.

## Patentansprüche

1. Verbindung, die eine fluorpolyethergruppenhaltige Verbindung der Formel (1) oder (2) ist:
Rf¹-R^{F}-O_{q}-X-R^{Si} (1)
R^{Si}-X-Rf²ₚ-R^{F}-O_{q}-X-R^{Si} (2)
worin
R^{f1} C₁₋₁₆-Alkyl, optional substituiert mit F, ist,
R^{f2} C₁₋₆-Alkylen, optional substituiert mit F, ist,
R^{F} eine Gruppe der Formel: -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-ist, worin a-f jeweils unabhängig eine ganze Zahl von 0-200 sind, wobei (a+b+c+d+e+f) ≥ 1 ist, und die Reihenfolge der Wiederholungseinheiten die in den Klammern eingeschlossen sind, die mit a, b, c, d, e oder f versehen sind, nicht beschränkt ist,
R^{Fa} jeweils unabhängig H, F oder Cl ist,
p 0 oder 1 ist,
q 0 oder 1 ist,
X jeweils unabhängig eine Gruppe -(CH₂)_{z1}-O-R^{z2}- ist,worin
z1 eine ganze Zahl von 0-20 ist,
R^{z2} -(CH₂)_{z2}-, optional substituiert mit C₁₋₆-Alkyl oder einer Cycloalkylgruppe, die optional ein oder mehrere N, O, S oder Si enthält, oder mit Perfluoralkyl, ist und z2 eine ganze Zahl von 0-20 ist,
R^{Si} jeweils unabhängig -SiR^{a1}₂R^{b1} (S1) ist, worin
R^{a1} -Z-SiR²²_{q1}R²³ᵣ₁ ist,
Z¹ jeweils unabhängig C₁₋₆-Alkylen, -(CH₂)_{z11}-O-(CH₂)_{z12}- oder -(CH₂)_{z13}-Phenylen-(CH₂)_{z14}- ist, worin z11 und z12 jeweils unabhängig eine ganze Zahl von 1-6 sind und z13 und z14 jeweils unabhängig eine ganze Zahl von 0-6 sind,
R²² jeweils unabhängig OH oder eine Gruppe ist, die durch eine Hydrolysereaktion entfernt werden kann,
R²³ jeweils unabhängig H oder eine einwertige organische Gruppe ist,
q1 eine ganze Zahl von 1-3 ist,
r1 eine ganze Zahl von 0-2 ist und
R^{b1} C₁₋₆-Alkyl ist.

2. Verbindung nach Anspruch 1, worin z1 jeweils unabhängig eine ganze Zahl von 1-20 ist und z2 jeweils unabhängig eine ganze Zahl von 1-20 it.

3. Verbindung nach Anspruch 1 oder 2, worin z¹ jeweils unabhängig C₁₋₆-Alkylen ist.

4. Verbindung nach einem der Ansprüche 1-3, worin q1 2 oder 3 ist.

5. Verbindung nach einem der Ansprüche 1-4, worin R^{Fa} F ist.

6. Verbindung nach einem der Ansprüche 1-5, worin R^{F} eine Gruppe, ausgewählt aus den Formeln (f1)-(f5), ist:
-(OC₃F₆)_{d}- (f1)
worin d eine ganze Zahl von 1 bis 200 ist,
- (OC₄F)_{c}-(OC₃F₆)_{d}-(OC₂F₄)ₑ-(OCF₂)_{f}- (f2)
worin c und d jeweils unabhängig eine ganze Zahl von 0-30 sind, e und f jeweils unabhängig eine ganze Zahl von 1-200 sind, wobei (c+d+e+f) ≥ 2 ist, und die Reihenfolge der Wiederholungseinheiten eingeschlossen sind, die in den Klammern, die mit dem tiefgestellten Index c, d, e oder f versehen sind, nicht beschränkt ist,
-(R⁶-R⁷)_{g}- (f3)
wobei R⁶ OCF₂ oder OC₂F₄ ist, R⁷ ein OC₂F₄, OC₃F₆, OC₄F₈, OC₅F₁₀ oder OC₆F₁₂ oder eine Kombination aus zwei oder drei Gruppen, die unabhängig aus diesen Gruppen ausgewählt sind, ist und g eine ganze Zahl von 2-100 ist,
-(OC₆F₁₂)ₐ-(OC₅F₁₀)_{b}-(OC₄F₂)_{c}-(OC₃F₆)_{d}-(OC₂F₄)ₑ-(OCF₂)_{f}- (f4)
worin e eine ganze Zahl von 1-200 ist, a, b, c, d und f jeweils unabhängig eine ganze Zahl von 0-200 ist, wobei (a+b+c+d+e+f) ≥ 1 ist, und die Reihenfolge der Wiederholungseinheiten, die in den Klammern eingeschlossen sind, die mit a, b, c, d, e oder f versehen sind, nicht beschränkt ist, und
-(OC₆F₁₂)ₐ-(OC₅F₁₀)_{b}-(OC₄F₂)_{c}-(OC₃F₆)_{d}-(OC₂F₄)ₑ-(OCF₂)_{f}- (f5)
worin f eine ganze Zahl von 1-200 ist, a-e jeweils unabhängig eine ganze Zahl von 0-200 sind, wobei (a+b+c+d+e+f) ≥ 1 ist, und die Reihenfolge der Wiederholungseinheiten, die in den Klammern eingeschlossen sind, die mit a, c, b, c, d oder f versehen sind, nicht beschränkt ist.

7. Verbindung nach einem der Ansprüche 1-6, wobei R^{F} ein zahlengemitteltes Molekulargewicht von 6.000-30.000, gemessen durch ¹⁹F-NMR, aufweist.

8. Verbindung nach einem der Ansprüche 1-7, worin R^{F} eine Gruppe der Formel (f2) ist.

9. Verbindung nach einem der Ansprüche 1-8, wobei das Verhältnis e/f < 1,0 ist.

10. Oberflächenbehandlungsmittel, umfassend die Verbindung nach einem der Ansprüche 1-9.

11. Oberflächenbehandlungsmittel nach Anspruch 10, ferner umfassend eine oder mehrere weitere Komponenten, ausgewählt aus einem fluorhaltigen Öl, einem Silikonöl und Katalysator.

12. Oberflächenbehandlungsmittel nach Anspruch 10 oder 11, ferner umfassend ein Lösungsmittel.

13. Verwendung des Oberflächenbehandlungsmittels nach einem der Ansprüche 10-12 zur Vakuumabscheidung und/oder als ein Antifoulingbeschichtungsmittel oder wasserfestes Beschichtungsmittel.

14. Pellet, umfassend das Oberflächenbehandlungsmittel nach einem der Ansprüche 10-13.

15. Artikel, vorzugsweise optisches Element, umfassend ein Substrat und auf einer Oberfläche davon eine Schicht, die aus der Verbindung nach einem der Ansprüche 1-9 oder dem Oberflächenbehandlungsmittel nach einem der Ansprüche 10-13 gebildet ist.

## Revendications

1. Composé, qui est un composé contenant un groupe fluoro polyéther de formule (1) ou (2) :
Rf¹-R^{F}-O_{q}-X-R^{Si} (1)
R^{Si}-X-R^{f2}ₚ-R^{F}O_{q}-X-R^{si} (2)
dans lequel
Rf¹ est un alkyle en C₁₋₁₆ facultativement substitué par F ;
Rf² est un alkylène en C₁₋₆ facultativement substitué par F ;
R^{F} est un groupe de la formule : -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-Dans lequel a-f sont chacun indépendamment un nombre entier de 0-200, avec (a+b+c+d+e+f) ≥ 1, et l'ordre des motifs de répétition indiqués entre parenthèses présentant a, b, c, d, e ou f n'est pas limité ;
R^{Fa} est chacun indépendamment H, F ou Cl ;
p est 0 ou 1 ;
q est 0 ou 1 ;
X est chacun indépendamment un groupe -(CH₂)_{z1}-O-R^{z2}-, dans lequel
z1 est un nombre entier de 0-20,
R^{z2} est -(CH₂)_{z2}- facultativement substitué par un alkyle en C₁₋₆ ou un groupe alkyle cyclique contenant facultativement un ou plusieurs N, O, S ou Si, ou par un perfluoroalkyle ; et z2 est un nombre entier de 0-20 ;
R^{Si} est chacun indépendamment -SiR^{a1}₂R^{b1} (S1), dans lequel
R^{a1} est -Z¹-SiR²²_{q1}R²³ᵣ₁ ;
Z¹ est chacun indépendamment un alkylène en C₁₋₆, -(CH₂)_{z11}-O-(CH₂)_{z12}- ou -(CH₂)_{z13}-phénylène-(CH₂)_{z14}-, dans lequel z11 et z12 sont chacun indépendamment un nombre entier de 1-6 et z13 et z14 sont chacun indépendamment un nombre entier de 0-6 ;
R²² est chacun indépendamment OH ou un groupe qui peut être supprimé par une réaction d'hydrolyse ;
R²³ est chacun indépendamment H ou un groupe organique monovalent ;
q1 est un nombre entier de 1-3 ;
r1 est un nombre entier de 0-2 ; et
R^{b1} est un alkyle en C₁₋₆.

2. Composé selon la revendication 1, dans lequel z1 est chacun indépendamment un nombre entier de 1-20, et z2 est chacun indépendamment un nombre entier de 1-20.

3. Composé selon la revendication 1 ou la revendication 2, dans lequel Z¹ est chacun indépendamment un alkylène en C₁₋₆.

4. Composé selon l'une quelconque des revendications 1 à 3, dans lequel q1 est 2 ou 3.

5. Composé selon l'une quelconque des revendications 1 à 4, dans lequel R^{Fa} est F.

6. Composé selon l'une quelconque des revendications 1 à 5, dans lequel R^{F} est un groupe sélectionné parmi les formules (f1)-(f5) :
-(OC₃F₆)_{d}- (f1)
dans lequel d est un nombre entier de 1 à 200 ;
-(OC₄F₈)_{c}-(OC₃F₆)_{d}-(OC₂F₄)ₑ-(OCF₂)_{f}- (f2)
dans lequel c et d sont chacun indépendamment un nombre entier de 0-30, e et f sont chacun indépendamment un nombre entier de 1-200, avec (c+d+e+f) ≥ 2, et l'ordre des unités de répétition entre parenthèses présentant un indice c, d, e ou f n'est pas limité ;
-(R⁶-R⁷)_{g}- (f3)
dans lequel R⁶ est OCF₂ ou OC₂F₄, R⁷ est un OC₂F₄, OC₃F₆, OC₄F₈, OC₅F₁₀ ou OC₆F₁₂, ou une combinaison de deux ou trois groupes indépendamment sélectionnés parmi ces groupes, et g est un nombre entier de 2-100 ;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
dans lequel e est un nombre entier de 1-200, a, b, c, d et f sont chacun indépendamment un nombre entier de 0-200, avec (a+b+c+d+e+f) ≥ 1, et l'ordre des unités de répétition entre parenthèses présentant un indice a, b, c, d, e ou f n'est pas limité ; et
-(OC₆F₁₂),-(OC₅F₁₀)_{b}-(OC₄F₈)_{c}-(OC₃F₆)_{d}-(OC₂F₄)ₑ-(OCF₂)_{f}- (f5)
dans lequel f est un nombre entier de 1-200, a-e sont chacun indépendamment un nombre entier de 0-200, avec (a+b+c+d+e+f) ≥ 1, et l'ordre des unités de répétition entre parenthèses présentant un indice a, b, c, d, e ou f n'est pas limité.

7. Composé selon l'une quelconque des revendications 1 à 6, dans lequel R^{F} présente un poids moléculaire moyen en nombre de 6 000-30 000 mesuré par ¹⁹F-RMN.

8. Composé selon l'une quelconque des revendications 1 à 7, dans lequel R^{F} est un groupe de la formule (f2).

9. Composé selon l'une quelconque des revendications 1 à 8, dans lequel le rapport e/f est < 1,0.

10. Agent de traitement de surface comprenant le composé selon l'une quelconque des revendications 1 à 9.

11. Agent de traitement de surface selon la revendication 10, comprenant en outre un ou plusieurs autres composants sélectionnés parmi une huile contenant du fluor, une huile de silicone et un catalyseur.

12. Agent de traitement de surface selon la revendication 10 ou la revendication 11, comprenant en outre un solvant.

13. Utilisation de l'agent de traitement de surface selon l'une quelconque des revendications 10 à 12 pour un dépôt sous vide et/ou en tant qu'agent de revêtement antisalissures ou agent de revêtement étanche à l'eau.

14. Pastille comprenant l'agent de traitement de surface selon l'une quelconque des revendications 10 à 13.

15. Article, préférablement un élément optique, comprenant un substrat et, sur une surface de celui-ci, une couche formée du composé selon l'une quelconque des revendications 1 à 9 ou de l'agent de traitement de surface selon l'une quelconque des revendications 10 à 13.
